# EUROPEAN PATENT SPECIFICATION

(11) **EP 4 589 720 B1**
(45) Date of publication and mention of the grant of the patent: **25.11.2026**
(21) Application number: 23901016.8
(22) Date of filing: 01.12.2023
(51) Int. Cl.: H01M 4/66, H01M 4/36, H01M 4/02, H01M 4/13, H01M 4/62, H01M 10/052, H01M 10/42

(54) **ELECTRODE FOR LITHIUM SECONDARY BATTERY AND LITHIUM SECONDARY BATTERY COMPRISING THE SAME**
ELEKTRODE FÜR LITHIUMSEKUNDÄRBATTERIE UND LITHIUMSEKUNDÄRBATTERIE DAMIT
ÉLECTRODE POUR BATTERIE SECONDAIRE AU LITHIUM ET BATTERIE SECONDAIRE AU LITHIUM LA COMPORTANT

(30) Priority: 08.12.2022 KR 20220170925
(43) Date of publication of application: 23.07.2025
(73) Proprietor: LG Energy Solution, Ltd., Seoul 07335 (KR); LG CHEM, LTD., Seoul 07336 (KR)
(72) Inventor: KWON, Soonho, Daejeon 34122 (KR); PARK, Sungbin, Daejeon 34122 (KR); KIM, Mingyu, Daejeon 34122 (KR); CHO, Woohyung, Daejeon 34122 (KR); KANG, Joon Koo, Daejeon 34122 (KR); PARK, Eun Kyoung, Daejeon 34122 (KR); SONG, Intaek, Daejeon 34122 (KR); YANG, Heemyeong, Daejeon 34122 (KR); CHOI, Hyunju, Daejeon 34122 (KR); KIM, Ki Hwan, Daejeon 34122 (KR); KOH, Jongkwan, Daejeon 34122 (KR)
(74) Representative: Goddar, Heinz J.
(86) International application number: PCT/KR2023/019647
(87) International publication number: WO 2024/122997

(56) References cited:
- JP-A- 2021 099 934
- KR-A- 20100 000 685
- KR-A- 20130 004 153
- KR-A- 20190 049 191
- KR-A- 20220 142 703
- US-A1- 2001 041 285
- US-A1- 2019 058 185
- US-A1- 2021 050 583

## Description

### [TECHNICAL FIELD]

The present disclosure relates to an electrode for a lithium secondary battery that includes a uniform safety functional layer to suppress heat generation or ignition, and enables the provision of a battery exhibiting excellent charge/discharge characteristics while having excellent stability, and a lithium secondary battery comprising the same.

### [BACKGROUND]

As demand for medium- and large-sized devices such as electric vehicles and hybrid electric vehicles, and mobile devices such as smartphones and tablet PCs has increased significantly, demand for secondary batteries as an energy source needed to drive such devices is rapidly increasing. In particular, as the data processing speed and the usage time of the mobile devices increase, lithium secondary batteries, which have higher energy density and operating potential, can maintain excellent characteristics over a long period of time, and have a low self-discharge rate, are being actively developed.

However, as the capacity and energy density of lithium secondary batteries have increased significantly, many ignition and explosion accidents caused by overcharging, exposure to high temperatures, external impacts, etc. of various mobile devices or electric vehicles containing the same have been reported. Thus, recently, one of the major research tasks for lithium secondary batteries is to improve safety by suppressing ignition and explosion.

It is known that the direct cause of ignition, explosion, and the like in the lithium secondary batteries is a short circuit caused by direct contact between a positive electrode and a negative electrode inside the secondary battery due to stimuli applied from the outside, such as high temperatures and external impacts. For example, when a lithium secondary battery is overcharged, or exposed to high temperature or external impacts, the internal temperature of the secondary battery may rise rapidly, causing the separator to shrink, or the internal structure of the secondary battery may be destroyed due to external impacts. As a result, the positive electrode and the negative electrode may come into contact, so that a short circuit may occur. When such a short circuit occurs, the movement of lithium ions and electrons may be concentrated through the contact portion between the positive electrode and the negative electrode so that overcurrent can occur, which may cause heat generation, gas generation inside the battery, and volume expansion, and thus may pose a risk of ignition or explosion of the lithium secondary batteries.

Therefore, in order to suppress ignition and explosion during the short circuit and improve the safety of the secondary batteries, it is necessary to increase the resistance between the electrodes and interrupt the current when high temperatures or external impacts are applied. For this purpose, various attempts have been made to add various functional layers or functional materials to electrodes for lithium secondary batteries to increase resistance when high temperatures are applied, thereby improving the safety of secondary batteries.

However, in the case of an electrode to which a previously known functional layer, and the like are added, it is difficult to sufficiently improve the safety of a lithium secondary battery, or a functional layer is not formed uniformly, which provides the disadvantage of impairing basic battery performance such as charge/discharge characteristics of the secondary battery.

US 2019/058185 A1 discloses a negative electrode for a lithium secondary battery comprising: a lithium metal layer; and a multilayer-structured protective layer formed on the lithium metal layer, wherein the protective layer includes a first protective layer including a composite material of carbon nanotube-ion conductive polymer; and a second protective layer including a composite material of carbon nanotube-electrically conductive polymer. The conductive polymer can be polythiophene.

US 2021/050583 A1 discloses a positive electrode plate, comprising a current collector, a safety coating, a difficultly soluble layer and a positive active material layer, wherein the safety coating comprises a polymer matrix, a conductive material and an inorganic filler. The conductive agent present in the difficultly soluble layer may be polythiopene.

JP 2021099934 A discloses a current collector for all-solid-state batteries in which coating layers are formed on both sides of a sheet-shaped conductive substrate.

KR 20220142703 A discloses an electrode comprising: a current collector including a main body and an electrode tab formed at one side at the main body; a conductive coating layer which is formed on at least one surface of the current collector and includes a conducting polymer; and an electrode mixture layer which is formed on the conductive coating layer, wherein the conductive coating layer is formed on a region including both the main body and the electrode tab.

KR 20100000685 A discloses an electrode for a solar cell. A conductive paste used comprises a binder and silica or bentonite.

US 2001/041285 A1 discloses an electrode comprising an electrode active material layer containing an active material; and an electronic conducting current collector on which the electrode active material layer is formed, wherein said electrode active material layer has the property of increasing its resistance with a rising temperature.

KR 20130004153 A discloses an electrode assembly for a secondary battery.

KR 20190049191 A discloses a positive electrode plate and a negative electrode plate; a separator disposed between the positive electrode plate and the negative electrode plate; and a coating layer disposed between the separator and the positive electrode plate and between the separator and the negative electrode plate, wherein at least one of the positive electrode plate and the negative electrode plate comprises a positive temperature coefficient material.

### [DETAILED DESCRIPTION OF THE INVENTION]

### [Technical Problem]

It is an object of the present disclosure to provide an electrode for a lithium secondary battery that includes a uniform safety functional layer to suppress heat generation or ignition, and enables the provision of a battery exhibiting excellent charge/discharge characteristics while having excellent stability.

It is another object of the present disclosure to provide a lithium secondary battery that includes the electrode and thus exhibits excellent charge/discharge characteristics.

### [Technical Solution]

According to one aspect of the present disclosure, there is provided an electrode for a lithium secondary battery comprising:
a metal current collector;
a safety functional layer formed to cover at least a part of the metal current collector, and including a polythiophene-based conductive polymer exhibiting PTC(positive temperature coefficient) characteristics and a thixotropic agent; and
an active material layer including an electrode active material and a conductive material, and formed on the metal current collector and the safety functional layer.

According to another aspect of the present disclosure, there is provided a lithium secondary battery comprising a positive electrode, a negative electrode, and separator interposed between them, wherein the electrode is included as the positive electrode.

Further embodiments are disclosed in the dependent claims.

Now, an electrode for a lithium secondary battery, and a lithium secondary battery, etc. comprising the same according to specific embodiments of the present disclosure will be described.

Terms or words used in the present specification and claims should not be construed as limited to ordinary or dictionary terms, and the present disclosure should be construed with meanings and concepts that are consistent with the technical idea of the present disclosure based on the principle that the inventors can appropriately define concepts of the terms to appropriately describe their own invention in the best way.

The terms used herein are provided to describe exemplary embodiments but not to limit the inventive concept. The singular forms include plural forms unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

According to one embodiment of the present disclosure, there is provided an electrode for a lithium secondary battery comprising:
a metal current collector;
a safety functional layer formed to cover at least a part of the metal current collector, and including a polythiophene-based conductive polymer exhibiting PCT(positive temperature coefficient) characteristics and a thixotropic agent; and
an active material layer including an electrode active material and a conductive material, and formed on the metal current collector and the safety functional layer.

The electrode of the embodiment is configured such that a safety functional layer including a polythiophene-based conductive polymer exhibiting PTC characteristics and a thixotropic agent is formed on the surface of the metal current collector.

First, as the lithium secondary battery is activated, the polythiophene-based conductive polymer can exhibit conductivity by doping anions derived from the electrolyte of the secondary battery onto the aromatic thiophene ring of the conductive polymer. Therefore, in a normal charge and discharge process of the secondary battery, the conductive polymer exhibits conductivity, thereby allowing the secondary battery to exhibit appropriate charge/discharge characteristics.

However, the conductive polymer can be de-doped from the aromatic thiophene ring by anions derived from the electrolyte at temperatures above a certain level. As a result, the conductive polymer may act as a nonconductor, thereby increasing resistance and exhibiting PTC characteristics that interrupt the flow of current. Due to the action of such a polythiophene-based conductive polymer, an electrode of one embodiment in which a safety functional layer containing the conductive polymer is formed can contribute to improving the stability of a lithium secondary battery as described below.

When an external stimulus such as overcharging, high temperature, or external shock is applied to the lithium secondary battery including the electrode, the temperature inside the battery rises rapidly, such conductive polymers can be converted into a nonconductor due to the above-described de-doping of anions or the like. Therefore, it is possible to significantly increase the resistance within the electrode and interrupt the flow of current between the current collector and the active material layer, thereby preventing overcurrent caused by short circuits between electrodes, and suppressing heat generation, ignition, explosion, gas generation, and the like of the secondary battery.

By the way, when the safety functional layer is coated and formed only with the polythiophene-based conductive polymer, it becomes difficult to uniformly form the safety functional layer due to the fluidity and/or viscosity of such a polymer. In this case, the safety functional layer may be formed locally too thin or thick, and the safety functional layer may not exhibit sufficient adhesion to a metal current collector or the like, which may make it difficult to form the layer well.

Due to the uneven formation of the safety functional layer, the safety functional layer cannot completely interrupt overcurrent locally even at temperatures above a certain level. Thus, it is difficult to ensure excellent safety of the lithium secondary battery, or the safety functional layer has a locally large thickness, so that the basic performance of the charge/discharge characteristics of the lithium secondary battery may be deteriorated.

However, since the electrode of one embodiment includes a thixotropic agent together with the conductive polymer, the safety functional layer can be formed more uniformly. More specifically, the thixotropic agent may be added to the composition for forming a safety functional layer to improve its fluidity and exhibit uniform coating properties. In addition, after coating and drying the composition, the viscosity of the composition can be increased again, thereby contributing to the adhesion of the safety functional layer.

Due to the action of such a thixotropic agent, the electrode of one embodiment may include a uniform safety functional layer with a small variation in thickness as a whole, and a uniform active material layer may be formed on the safety functional layer. Furthermore, in cases where an electrode included in a plurality of lithium secondary batteries is manufactured by continuously producing electrode sheets and then punching out such electrode sheets, the safety functional layer and the active material layer may have uniform thickness in each electrode included in a plurality of lithium secondary batteries. For example, in each electrode included in one or more lithium secondary batteries manufactured from the same electrode sheet, the thickness of the safety functional layer may have a standard deviation of 60 nm or less, or 50 nm or less, or 5 to 50 nm.

As a result, in the electrode of one embodiment, when a stimulus such as high temperature is applied to a lithium secondary battery, the safety functional layer can effectively interrupt overcurrent and thus improve the safety of the lithium secondary battery. In addition, due to the formation of this uniform safety functional layer, it is possible to minimize the deterioration in basic performance such as charge/discharge characteristics of the lithium secondary battery.

Meanwhile, the polythiophene-based conductive polymer included in the electrode of the embodiment exhibits the above-mentioned PTC characteristics, and the usable operating temperature at which this conductive polymer is converted into a nonconductor may be 70 to 130°C, or 80 to 125°C. As the conductive polymer is converted into a nonconductor at such a usable operating temperature, the conductive polymer does not interfere with the normal charge and discharge process of the secondary battery and can more effectively suppress ignition or explosion of the secondary battery when an external stimulus is applied.

In addition, the conductive polymer may be a polythiophene-based polymer or copolymer containing substituted or unsubstituted thiophene-based repeating units in an amount of 50 mol% or more, 70 mol% or more, or 90 to 100 mol% of the total repeating units.

In a more specific example, the conductive polymer may be a polythiophene-based polymer or copolymer in which an alkylene oxide group is bonded to a thiophene ring in the repeating unit, for example, a homopolymer or copolymer containing a repeating unit of the following Chemical Formula 1: 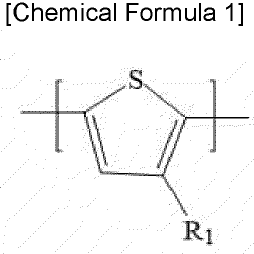 wherein, in Chemical Formula 1, R₁ is a functional group of the following Chemical Formula 2, 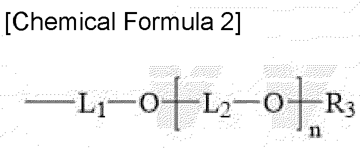 wherein, in Chemical Formula 2, L₁ is a single bond or an alkylene group, L₂ is an alkylene group, R₃ is hydrogen or an alkyl group, and n is an integer in a range of 1 to 5000, or 10 to 2000, or 50 to 1000, wherein the alkylene group may be an alkylene group having 2 to 5 carbon atoms, and the alkyl group may be an alkyl group having 1 to 5 carbon atoms.

Further, such a polythiophene-based conductive polymer may have a weight average molecular weight of, for example, 5000 to 100000 g/mol, or 10000 to 80000 g/mol. Thereby, the composition for forming the safety functional layer can exhibit excellent coating properties, and can also exhibit appropriate adhesion to metal current collectors, and the like.

In a more specific embodiment, the polythiophene-based conductive polymer may contain the repeating unit of Chemical Formula 1 in an amount of more than 0 mol%, or 0.001 mol% or more, or 0.01 mol% or more, or 1 mol% or more, and 100 mol% or less, or 80 mol% or less, or 50 mol% or less. Herein, the polythiophene-based conductive polymer may include the remaining amount of alkyl thiophene-based repeating units excluding the repeating units of Chemical Formula 1, for example, an alkyl thiophene-based repeating unit in which an alkyl group having 1 to 20 carbon atoms, or 3 to 15 carbon atoms is substituted on a thiophene ring.

Such a polythiophene-based conductive polymer includes the substituted thiophene ring, and thus can exhibit an appropriate usable operating temperature, etc., and as a result, can be converted into a nonconductor when high temperatures above a certain level are applied, without impeding the charge/discharge characteristics of a lithium secondary battery, thereby improving the safety of the secondary battery.

Furthermore, because the polythiophene-based conductive polymer has the above-mentioned predetermined structure, it can exhibit relatively low affinity and solubility for organic solvents, such as N-methylpyrrolidone, which are mainly included in the slurry composition for forming the electrode active material layer, and can exhibit excellent adhesion to the metal current collector. Therefore, in the process of forming such a polythiophene-based conductive polymer on a metal current collector and then coating and drying the slurry composition to form an electrode active material layer, the phenomenon in which the conductive polymer dissociates and spreads over a wide area of the active material layer can be minimized. Therefore, by using this polythiophene-based conductive polymer, the safety functional layer can be uniformly formed near the surface of the metal current collector. Therefore, the conductive polymer can contribute to improving the safety of the secondary battery without impairing their basic performance.

Meanwhile, the conductive polymer may be contained in an amount of 0.001 to 5 parts by weight, or 0.005 to 5 parts by weight, based on 100 parts by weight of the electrode active material (e.g., positive electrode active material) included in the active material layer. As a result, the electrode of one embodiment may have more excellent safety and charge/discharge characteristics.

The conductive polymer having the repeating unit of the Chemical Formula 1 can be prepared, for example, by subjecting a halogenated thiophene compound and an alkylene glycol compound to a substitution reaction to prepare a monomer to which the functional group of Chemical Formula 2 is bonded, and then polymerizing such a monomer alone, or copolymerizing the monomer with other monomers such as alkyl thiophene. Specific conditions for preparing such monomers and polymers are described in the Preparation Examples described below.

Meanwhile, in the electrode of one embodiment, the safety functional layer includes a thixotropic agent together with the above-mentioned polythiophene-based conductive polymer. The thixotropic agent may be mixed with the conductive polymer to increase the fluidity of the composition for forming a safety functional layer and contribute to improvement of its coating properties and uniform formation of the safety functional layer. Further, after coating and drying the composition, the viscosity of the composition can be increased again so that the safety functional layer has excellent adhesion to the metal current collector.

As such a thixotropic agent, organic substances or inorganic particles that can cause a change in the sol-gel state of a polymer solution or an increase or decrease in fluidity can be used. Specific examples of the thixotropic agent include a hydrophilic fumed silica, an aluminum salt, a bentonite or a derivative thereof, a cellulose-based compound, a polyvinyl-based compound, a polyacrylic acid-based compound, a modified urea or a maleic acid copolymer, etc. In consideration of the polythiophene-based conductive polymer, etc., the thixotropic agent in the form of the modified urea or its organic solution can be appropriately used.

As the thixotropic agent, existing commercially available thixotropic agents can be used. Examples of commercially available thixotropic agents include HL-200, HL-300, HL-380 (available from DKSH), GARAMITE-1958, RHEOBYK-410, 411, 7410, 605 (available from BYK), Alugel 28DG, Laevisil-SP (available from Baerlocher), CAB-O-SIL H-300 (available from Cabot), Jaylink JL-106E (available from Dymax), Bentone 38, SD3, 34 (available from Elementis), and the like.

Such a thixotropic agent may be contained in the safety functional layer in an amount of 0.1 to 5 parts by weight, or 0.2 to 3 parts by weight, or 0.5 to 2 parts by weight, based on 100 parts by weight of the polythiophene-based conductive polymer, so as not to obstruct the electrical characteristic of the electrode, etc. while appropriately controlling the fluidity and viscosity of the composition for forming the safety functional layer.

Meanwhile, the safety functional layer can be formed by dissolving or dispersing the above-mentioned conductive polymer and thixotropic agent in an organic solvent such as chloroform, tetrahydrofuran (THF), toluene, or xylene at a concentration of about 0.1 to 5% by weight to form a liquid composition and then coating and drying this composition on the metal current collector. After that, the slurry composition described below is applied and dried to form an active material layer, and the active material layer can be rolled to produce an electrode for a lithium secondary battery of one embodiment.

At this time, the safety functional layer and the liquid composition for forming the same may further include at least one additive selected from the group consisting of a carbon-based conductive material, a conductive inorganic particle, a binder, and an esterified saccharide in addition to the conductive polymer.

At this time, as the carbon-based conductive material and the binder, the same components as those included in the active material layer described below can be used, and by the addition of these components, the conductivity of the electrode of one embodiment, the adhesiveness or mechanical properties of the safety functional layer, etc. can be further improved. Further, as the conductive inorganic particles, alumina or zirconia particles having a nanoscale particle size, for example, 5 to 100 nm, can be used, and by the addition of these particles, the conductivity of the electrode and the secondary battery can be further improved. Moreover, a monosaccharide, oligosaccharide, polysaccharide, etc. having an acyl group can be used as the esterified saccharide. This component can play the role of generating gas when overcharging the secondary battery and interrupting the conductive path between the metal current collector and the electrode active material, and by the addition of this component, the safety of the secondary battery can be further improved.

Meanwhile, the electrode of one embodiment further includes an active material layer formed on the metal current collector and the safety functional layer, wherein such an active material layer may include an electrode active material, a conductive material, and optionally a binder. At this time, since it is preferable that the electrode formed with the conductive polymer serves as a positive electrode, such examples will mainly be explained below.

In the positive electrode for a lithium secondary battery, the metal current collector may generally have a thickness of 3 to 100 *µ*m, and can be formed of any metal or alloy that has excellent conductivity without causing chemical changes in the secondary battery. Examples of such metal current collectors include metal current collectors such as stainless steel, aluminum, copper, nickel, or titanium, or aluminum or stainless steel whose surface is treated with carbon, nickel, titanium, or silver, and the like. Further, the metal current collector can form fine protrusions and depressions on the surface thereof to enhance the adhesion of the safety functional layer, etc., and can be used in various forms such as a film, a sheet, a foil, a net, a porous body, a foaming body, and a non-woven fabric structure.

In addition, the positive electrode active material included in the active material layer is not particularly limited as long as it is a material capable of reversibly intercalating and de-intercalating lithium ions, and examples thereof include a lithium metal composite oxide containing at least one metal element selected from the group consisting of Co, Mn, Ni, W, Cu, Fe, V, Cr, Ti, Zr, Zn, Al, In, Ta, Y, La, Sr, Ga, Sc, Gd, Sm, Ca, Ce, Nb, Mg and Mo.

More specifically, a compound represented by any one of the following formulas can be used as the positive electrode active material: LiₐA_{1-b}R_{b}D₂(wherein, 0.90 ≤ a ≤ 1.8 and 0 ≤ b ≤ 0.5); LiₐE_{1-b}R_{b}O_{2-c}D_{c}(wherein, 0.90 ≤ a ≤ 1.8, 0 ≤ b ≤ 0.5, and 0 ≤ c ≤ 0.05); LiE_{2-b}R_{b}O_{4-c}D_{c}(wherein, 0 ≤ b ≤ 0.5, 0 ≤ c ≤ 0.05); LiₐNi_{1-b-c}Co_{b}R_{c}D_{α}(wherein, 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α}(wherein, 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂(wherein, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α}(wherein, 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α}(wherein, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂(wherein, 0.90 ≤ a ≤ 1.8, 0 ≤ b ≤ 0.5, 0 ≤ c ≤ 0.05 and 0 < α < 2); LiₐNi_{b}E_{c}G_{d}O₂(wherein, 0.90 ≤ a ≤ 1.8, 0 ≤ b ≤ 0.9, 0 ≤ c ≤ 0.5 and 0.001 ≤ d ≤ 0.1.); LiₐNi_{b}Co_{c}Mn_{d}GeO₂(wherein, 0.90 ≤ a ≤ 1.8, 0 ≤ b ≤ 0.9, 0 ≤ c ≤ 0.5, 0 ≤ d ≤0.5 and 0.001 ≤ e ≤ 0.1); LiₐNiG_{b}O₂(wherein, 0.90 ≤ a ≤ 1.8 and 0.001 ≤ b ≤ 0.1); LiₐCoG_{b}O₂(wherein, 0.90 ≤ a ≤ 1.8 and 0.001 ≤ b ≤ 0.1); LiₐMnG_{b}O₂(wherein, 0.90 ≤ a ≤ 1.8 and 0.001 ≤ b ≤ 0.1); LiₐMn₂G_{b}O₄(wherein, 0.90 ≤ a ≤ 1.8 and 0.001 ≤ b ≤ 0.1); QO₂; QS₂; LiQS₂; V₂O₅; LiV₂O₅; LiTO₂; LiNiVO₄; and Li_{(3-f)}J₂(PO₄)₃(0 ≤ f ≤ 2).

In the above formulas, A is Ni, Co, Mn or a combination thereof; R is Al, Ni, Co, Mn, Cr, Fe, Mg, V, or a combination thereof; D is O, F, S, P or a combination thereof; E is Co, Mn or a combination thereof; Z is F, S, P or a combination thereof; G is Al, Cr, Mn, Fe, Mg, La, Ce, V or a combination thereof; Q is Ti, Mo, Mn or a combination thereof; T is Cr, V, Fe, Sc, Y or a combination thereof; and J is V, Cr, Mn, Co, Ni, Cu or a combination thereof.

Further, those having a coating layer on the surface of the above compound can be used, or a mixture of the above compound and a compound having a coating layer can be used. The coating layer may include, as the coating element compound, an oxide of the coating element, a hydroxide of the coating element, an oxyhydroxide of the coating element, an oxycarbonate of the coating element, and a hydroxycarbonate of the coating element. The compounds constituting these coating layers may be amorphous or crystalline compounds. As the coating element included in the coating layer, Mg, Al, Co, K, Na, Ca, Si, Ti, V, Sn, Ge, Ga, B, As, Zr, or a mixture thereof can be used.

Further, the conductive material used in the active material layer is used to impart conductivity to the electrode, and the conductive material can be used without limitation as long as it has electronic conductivity without causing chemical changes in the battery to be configured. Examples thereof include natural graphite, artificial graphite, carbon black, carbon fiber, carbon nanotubes, metal powder such as copper, nickel, aluminum and silver, metal fibers, and the like. Further, conductive materials such as polyphenylene derivatives can be used alone or in a mixture of one or more thereof.

The conductive material may be added in an amount of 1 to 50 wt.%, or 2 to 20 wt.%, based on the total weight of the active material layer. Thereby, it is possible to ensure preferable formation of the positive electrode while obstructing excellent electrical characteristics to the positive electrode.

The binder plays a role in making the particles of the positive electrode active material adhere well to each other and further improving the binding properties of the active material layer. As a typical example thereof, the above-mentioned halogenated polyolefin-based polymer binder, polyvinylalcohol, carboxymethylcellulose, hydroxypropylcellulose, diacetylcellulose, polyvinylchloride, carboxylated polyvinylchloride, ethylene oxide-containing polymers, polyvinylpyrrolidone, polyurethane, polyethylene, polypropylene, styrene-butadiene rubbers, acrylated styrene-butadiene rubbers, epoxy resins, nylon, and the like can be used.

The binder may be added in an amount of 1 to 50 wt.%, or 2 to 30 wt.% based on the total weight of the active material layer. Thereby, it is possible to form a positive electrode with excellent durability without obstructing the electrical characteristics and/or capacity characteristics of the positive electrode.

The above-mentioned active material layer can be formed by dissolving or dispersing each component such as the above-mentioned positive electrode active material, conductive material, and binder in a medium such as an organic solvent to form a slurry composition, and then coating, drying, and rolling the slurry composition on a metal current collector on which the safety functional layer is formed.

At this time, examples of media such as the organic solvent include N-methyl-2-pyrrolidone (NMP), methoxy propyl acetate, butyl acetate, glycol acid, butyl ester, butyl glycol, methylalkylpolysiloxane, alkylbenzene, propylene glycol, xylene, monophenyl glycol, or the like, and among them, NMP, etc. can be appropriately used in consideration of the dispersibility and processablity of the above-mentioned positive electrode active material and conductive material.

Meanwhile, since the formation process and conditions of the active material layer may follow the general positive electrode formation process and conditions, further description thereof will be omitted.

The active material layer formed by the above-mentioned method may have a thickness of 5 to 200 µm, or 10 to 100 µm, and the safety functional layer may have a uniform thickness of 0.01 to 20 µm, or 0.05 to 10 µm.

This uniform thickness can be defined as the standard deviation of the thickness of the safety functional layer described above. For example, in each electrode included in one or more lithium secondary batteries manufactured from the same electrode sheet, the thickness of the safety functional layer may have a standard deviation of 60 nm or less, or 50 nm or less, or 5 to 50 nm.

As the safety functional layer is formed with the above-mentioned uniform thickness near the surface of the metal current collector, when an external stimulus such as an external shock is applied, the conductive polymer included in the safety functional layer prevents direct contact between the active material layer and the metal current collector, thereby ensuring improved safety of the secondary battery. In addition, the safety functional layer may be locally formed to be too thick, thereby minimizing obstruction of the charge/discharge characteristics of the secondary battery.

Meanwhile, according to the other embodiment of the present disclosure, there is provided a lithium secondary battery comprising the electrode of one embodiment as a positive electrode and simultaneously comprising the positive electrode, a negative electrode, and a separator interposed between them.

In such a lithium secondary battery of the other embodiment, the negative electrode is produced by coating, drying, and rolling a negative electrode active material on a negative electrode current collector, and may further include a conductive material and a binder as necessary.

The negative electrode active material may include, for example, graphite having a complete layered crystal structure such as natural graphite, soft carbon having a low-crystalline layered crystal structure (graphene structure in which hexagonal honeycomb shaped planes of carbon are arrayed in the form of a layer), hard carbon having a structure in which the low-crystalline structures are mixed with non-crystalline parts, carbon and graphite materials such as artificial graphite, expanded graphite, carbon fiber, hardly graphitizable carbon, carbon black, carbon nanotubes, fullerene, activated carbon; or metal composite oxides such as LixFe₂O₃(0≤x≤1), LixWO₂(0≤x≤1), SnxMe1-xMe'yOz (Me: Mn, Fe, Pb, Ge; Me': Al, B, P, Si, Group 1, 2, 3 elements in the periodic table, halogen; 0<x≤1; 1≤y≤3; 1≤z≤8); lithium metal; lithium alloys; silicon, silicon oxide or silicon-based alloys; tin-based alloys; a conductive polymer such as polyacetylene; Li-Co-Ni based materials; titanium oxide; or lithium titanium oxide, etc.

In one embodiment, the negative electrode active material may include both graphite and silicon (Si)-containing particles, the graphite may include at least one of natural graphite with a layered crystal structure and artificial graphite with an isotropic structure, and the silicon (Si)-containing particles are particles containing silicon (Si) as a main component , and may include silicon (Si) particles, silicon oxide particles, or a mixture of the silicon (Si) particles and silicon oxide particles.

In addition, the conductive material and binder that can be used together with the negative electrode active material may be the same components as the conductive material and binder included in the positive electrode active material layer.

Further, the negative electrode active material layer containing the negative electrode active material may have a thickness of 100 *µ*m to 200 *µ*m, or 120 *µ*m to 200 *µ*m.

Furthermore, the negative electrode current collector is not particularly limited as long as it has high conductivity without causing chemical changes in the battery. For example, copper, stainless steel, nickel, titanium, fired carbon, etc. can be used, and in the case of copper or stainless steel, materials surface-treated with carbon, nickel, titanium, silver, etc. may be used.

In addition, similar to the positive electrode current collector, the negative electrode current collector may have fine protrusions and depressions formed on a surface thereof to enhance adherence of a negative electrode active material layer, and may be formed in various forms such as a film, a sheet, a foil, a net, a porous body, a foaming body, and a non-woven fabric structure. Moreover, the average thickness of the negative electrode current collector can be appropriately applied in the range of 3~100 *µ*m in consideration of the conductivity and total thickness of the negative electrode to be produced.

Further, the separator is interposed between the positive electrode and the negative electrode, and a thin insulating film having high ion permeability and mechanical strength is used. The separator is not particularly limited as long as it is commonly used in this field. Specifically, chemically resistant and hydrophobic polypropylene; glass fiber; or sheets or non-woven fabrics made of polyethylene, etc. can be used. In some cases, a composite separator can be used in which inorganic particles/organic particles are coated by an organic binder polymer onto a porous polymer substrate such as a sheet or non-woven fabric. When a solid electrolyte such as a polymer is used as the electrolyte, the solid electrolyte can also serve as a separator. In addition, the separator may have an average pore diameter of 0.01 ~ 10 *µ*m, and an average thickness of 5 ~ 300 *µ*m.

The above-mentioned lithium secondary battery may further include an electrolyte, wherein such an electrolyte may be an electrolyte solution containing a non-aqueous organic solvent and a lithium salt, or an electrolyte membrane containing an organic or inorganic solid electrolyte, and these may be mixed and used together. However, the types of electrolytes that can be used are well known to those skilled in the art, and are not particularly limited in batteries of other embodiments, and thus, further description thereof will be omitted.

### [Advantageous Effects]

As described above, in the lithium secondary battery including the electrode of the present disclosure, even if an external stimulus such as overcharging, high temperature, or external impacts is applied and the temperature inside the battery rises rapidly, it is possible to effectively interrupt overcurrent by the safety functional layer uniformly formed near the metal current collector, thereby minimizing ignition, explosion, and the like.

Thereby, the lithium secondary battery can exhibit excellent safety, and the deterioration of charge/discharge characteristics caused by the safety functional layer can be suppressed, thereby exhibiting excellent electrochemical characteristics.

### [DETAILED DESCRIPTION OF THE EMBODIMENTS]

Hereinafter, various embodiments of the present disclosure will be described in detail so that those skilled in the art can easily carry out them. However, the present disclosure may be modified in various different ways, and is not limited to the embodiments set forth herein.

### Preparation example: Synthesis of monomer and conductive polymer

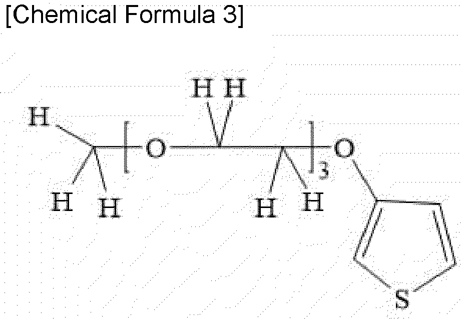

After creating the inside of the 3-way RBF (Round Bottom Flask) into a nitrogen environment through nitrogen flowing, 2.34 g (0.01 mol) of copper(I) iodide and 50.36 g (0.31 mol) of triethylene glycol were added. 3.68 g (0.096 mol) of sodium hydride 60% in mineral oil was slowly added to the RBF, and the mixture was stirred while maintaining a nitrogen environment. After stirring for about 1 hour, 10.0 g (0.06 mol) of 3-bromothiophene was added, and the mixture was refluxed at about 100°C for about 24 hours. The reaction solution was filtered through a pressure reducing device, and then washed with 100 mL of dichloromethane solution, and then washed with NH₄Cl and brine in that order. The solvent was removed through reduced pressure distillation, and the crude product was purified by column chromatography (hexane:ethyl acetate=60:40) to obtain about 9.0 g (yield: 60%) of the target compound (monomer compound of Chemical Formula 3).

124 g (767 mmol) of iron(III) chloride was dissolved in 1000 ml of methylene chloride, and 3.0 g (12.2 mmol) of the monomer compound of Chemical Formula 3 and 47.8 g (243 mmol) of 3-octyl thiophene were added to the solution, and the mixture was subjected to a polymerization reaction with stirring at about 25°C for 24 hours. The reaction solution was placed in an osmosis membrane with a MWCO (molecular weight of cut-off) of 5000, and then immersed in 1500 ml of acetonitrile solvent to remove unreacted iron(III) chloride, monomers, and the like. The residue precipitated inside the osmosis membrane was washed with methanol, and dried at about 25°C to obtain the desired conductive polymer. The weight average molecular weight (Mw) of the conductive polymer was confirmed to be about 34,000 g/mol.

### Example 1: Production of positive electrode and lithium secondary battery

### (Production of positive electrode)

20g of the conductive polymer (Mw=34,000g/mol) obtained in Preparation Example and 0.2 g of thixotropic agent RHEOBYK-411 (containing NMP solution of modified urea; available from BYK) were dissolved in 1,980g of chloroform solvent to obtain a composition. This composition was gravure-coated and dried to about 0.5 *µ*m on an aluminum (Al) thin film, which is a positive electrode current collector, to thereby form a safety functional layer. The average thickness and standard deviation of the safety functional layer finally formed after drying are shown in Table 1 below.

LiCoO₂ as a positive electrode active material, a conductive material (carbon black), and a binder (polyvinylidene fluoride) were added to N-methyl-2-pyrrolidone (NMP) at a weight ratio of 97.5:1:1.5 to prepare a positive electrode slurry (solids content: 60 wt.%). The slurry was coated onto the conductive polymer-containing layer and dried (however, the weight of the conductive polymer in the safety functional layer was about 0.5 parts by weight based on a total of 100 parts by weight of the positive electrode active material, the conductive material and the binder), and then roll-pressed to form an active material layer with a total thickness of 58 *µ*m, thereby producing a positive electrode.

### (Production of negative electrode)

A negative electrode active material (graphite), a binder (SBR-CMC), and a conductive material (carbon black) were added to water as a solvent at a weight ratio of 95:3.5:1.5 to prepare a negative electrode slurry (solids content: 60 wt. %). The negative electrode slurry was coated onto a copper (Cu) thin film as a negative electrode current collector having a thickness of 8 *µ*m, dried and then roll-pressed to produce a negative electrode.

### (Production of separator)

About 8.5 wt.% of polyvinylidene fluoride-hexafluoropropylene copolymer (PVdF-HFP) binder was added to acetone, and then dissolved at a temperature of 50°C for about 12 hours or more to prepare a binder solution. Al₂O₃ powder was added to this binder solution so that Al₂O₃/PVdF-HFP = 90/10 (wt.% ratio), and a slurry was prepared using a ball mill method for 12 hours or more. The slurry prepared in this way was coated onto a polyolefin-based separator with a thickness of about 8 *µ*m using a dip coating method. The coating thickness was adjusted to about 0.45 *µ*m to produce a porous separator.

### (Production of lithium secondary battery)

The positive electrode, the separator, and the negative electrode were sequentially stacked and then pressed using heat and pressure of 90°C and 200kPa to produce an electrode assembly composed of bi-cells. The assembled electrode assembly was housed in a pouch-type battery case, and ethylene carbonate(EC) and ethylmethyl carbonate (EMC) were mixed at a volume ratio of 30:70, and then an electrolyte solution in which LiPF₆ was dissolved to be 1.0M was injected, thereby producing a lithium secondary battery.

### Comparative Example 1

A positive electrode and a lithium secondary battery of Comparative Example 1 were produced in the same manner as in Example 1, except that the thixotropic agent of RHEOBYK-411 was not used.

### Test Example

### Measurement of thickness profile (standard deviation)

Using a confocal laser scanning microscope, the thickness of the finally formed safety functional layer was measured point by point in the TD (transverse direction) direction shown in Figure 1 below, and the average thickness and standard deviation of the measured values were confirmed.

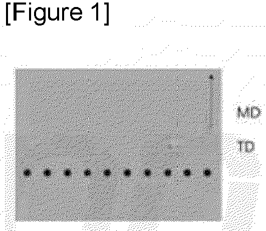

### Evaluation of high-rate discharge characteristics

The lithium secondary batteries produced in Examples and Comparative Example were charged under the conditions of constant current (0.7C) and constant voltage (4.47V, 0.025C cut-off), then rested for 10 minutes, and discharged until the voltage reached 3V under the conditions of constant current (0.1C, 0.2C, 0.5C, 1.0C, 1.5C). That is, when the number of charge/discharge cycles increased, the discharge rate was periodically changed to 0.1C, 0.2C, 0.5C, 1.0C, and 1.5C, respectively. Thereby, the high-rate discharge capability of each battery were evaluated. At this time, the high-rate discharge capability of 1.5C are shown in Table 1 below.

### Nail penetration test

Five lithium secondary batteries produced in Examples and Comparative Example were prepared, respectively, and fully charged to 100% SOC at 4.47V (0.05C cut off) under the conditions of CC/CV and 0.5C at 25°C, and then stored at room temperature for 24 hours. Each lithium secondary battery was placed on a flat plate, and a stainless steel nail with a diameter of 3 ± 0.2mm and a length of 100mm was penetrated into the center of the cell at a vertical angle and a penetration speed of 100mm/sec to measure the existence of ignition. Table 1 below lists the number of batteries that did not ignite among the five batteries.

**[Table 1]**

| | Average thickness (standard deviation) | High-rate discharge characteristics (%) | Nail penetration test (number of non-ignition/total number) |
|---|---|---|---|
| Example 1 | 457.3 nm (16.8 nm) | 91.3% (0.45%) | 5/5 |
| Comparative Example 1 | 451.2 nm (87.7 nm) | 89.0 % (4.5%) | 3/5 |

Referring to Table 1, it was confirmed that in the lithium secondary battery of Example 1, the safety functional layer is formed to have a more uniform thickness. As a result, it was confirmed that it exhibits not only excellent safety but also uniform and superior high-rate discharge characteristics compared to Comparative Example 1.

## Claims

1. An electrode for a lithium secondary battery comprising:
a metal current collector;
a safety functional layer formed to cover at least a part of the metal current collector, and including a polythiophene-based conductive polymer exhibiting PTC(positive temperature coefficient) characteristics and a thixotropic agent; and
an active material layer including an electrode active material and a conductive material, and formed on the metal current collector and the safety functional layer.

2. The electrode for a lithium secondary battery as claimed in claim 1, wherein the polythiophene-based conductive polymer has a usable operating temperature of 70 to 130°C.

3. The electrode for a lithium secondary battery as claimed in claim 1, wherein the polythiophene-based conductive polymer includes a homopolymer or copolymer containing a repeating unit of the following Chemical Formula 1: 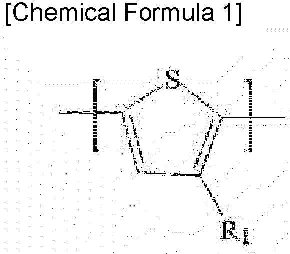
wherein, in Chemical Formula 1, R₁ is a functional group of the following Chemical Formula 2, 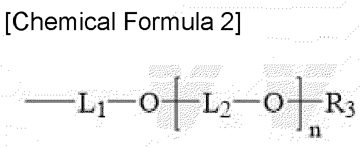
wherein, in Chemical Formula 2, L₁ is a single bond or an alkylene group, L₂ is an alkylene group, R₃ is hydrogen or an alkyl group, and n is an integer in a range of 1 to 5000.

4. The electrode for a lithium secondary battery as claimed in claim 1, wherein the thixotropic agent includes at least one selected from the group consisting of a hydrophilic fumed silica, an aluminum salt, a bentonite or a derivative thereof, a cellulose-based compound, a polyvinyl-based compound, a polyacrylic acid-based compound, a modified urea and a maleic acid copolymer.

5. The electrode for a lithium secondary battery as claimed in claim 1, wherein the thixotropic agent is contained in an amount of 0.1 to 5 parts by weight based on 100 parts by weight of the polythiophene-based conductive polymer.

6. The electrode for a lithium secondary battery as claimed in claim 1, wherein the safety functional layer further includes at least one additive selected from the group consisting of a carbon-based conductive material, a conductive inorganic particle, a binder, and an esterified saccharide.

7. The electrode for a lithium secondary battery as claimed in claim 1, wherein the active material layer has a thickness of 5 to 200 *µ*m, and the safety functional layer has a thickness of 0.01 to 20 *µ*m.

8. The electrode for a lithium secondary battery as claimed in claim 7, wherein a standard deviation of the thickness of the safety functional layer is 60 nm or less.

9. The electrode for a lithium secondary battery as claimed in claim 1, wherein the electrode serves as a positive electrode.

10. A lithium secondary battery comprising a positive electrode, a negative electrode, and separator interposed between them, wherein the electrode as claimed in claim 1 is included as the positive electrode.

## Patentansprüche

1. Elektrode für eine Lithium-Sekundärbatterie, umfassend:
einen Metallstromkollektor;
eine Sicherheitsfunktionsschicht, die so ausgebildet ist, dass sie mindestens einen Teil des Metallstromkollektors bedeckt, und die ein leitfähiges Polymer auf Polythiophenbasis, das PTC(positiver Temperaturkoeffizient)-Eigenschaften aufweist, und ein Thixotropiermittel enthält; und
eine Aktivmaterialschicht, die ein aktives Elektrodenmaterial und ein leitfähiges Material enthält und auf dem Metallstromkollektor und der Sicherheitsfunktionsschicht ausgebildet ist.

2. Elektrode für eine Lithium-Sekundärbatterie nach Anspruch 1, wobei das leitfähige Polymer auf Polythiophenbasis eine nutzbare Betriebstemperatur von 70 bis 130 °C aufweist.

3. Elektrode für eine Lithium-Sekundärbatterie nach Anspruch 1, wobei das leitfähige Polymer auf Polythiophenbasis ein Homopolymer oder Copolymer enthält, das eine Wiederholungseinheit der folgenden chemischen Formel 1 enthält: 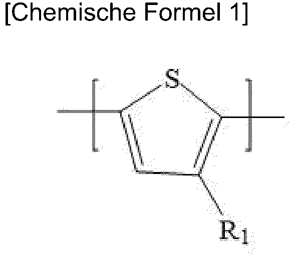
wobei in der chemischen Formel 1 R₁ eine funktionelle Gruppe der folgenden chemischen Formel 2 ist, 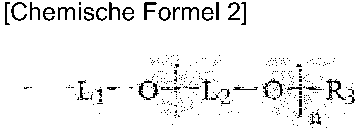
wobei in der chemischen Formel 2 L₁ eine Einfachbindung oder eine Alkylengruppe ist, L₂ eine Alkylengruppe ist, R₃ Wasserstoff oder eine Alkylgruppe ist und n eine ganze Zahl in einem Bereich von 1 bis 5000 ist.

4. Elektrode für eine Lithium-Sekundärbatterie nach Anspruch 1, wobei das Thixotropiermittel mindestens eines enthält, das aus der Gruppe ausgewählt ist, die aus einem hydrophilen pyrogenen Siliciumdioxid, einem Aluminiumsalz, einem Bentonit oder einem Derivat davon, einer Verbindung auf Cellulosebasis, einer Verbindung auf Polyvinylbasis, einer Verbindung auf Polyacrylsäurebasis, einem modifizierten Harnstoff und einem Maleinsäurecopolymer besteht.

5. Elektrode für eine Lithium-Sekundärbatterie nach Anspruch 1, wobei das Thixotropiermittel in einer Menge von 0,1 bis 5 Gewichtsteilen, bezogen auf 100 Gewichtsteile des leitfähigen Polymers auf Polythiophenbasis, enthalten ist.

6. Elektrode für eine Lithium-Sekundärbatterie nach Anspruch 1, wobei die Sicherheitsfunktionsschicht ferner mindestens ein Additiv enthält, das aus der Gruppe ausgewählt ist, die aus einem leitfähigen Material auf Kohlenstoffbasis, einem leitfähigen anorganischen Teilchen, einem Bindemittel und einem veresterten Saccharid besteht.

7. Elektrode für eine Lithium-Sekundärbatterie nach Anspruch 1, wobei die Aktivmaterialschicht eine Dicke von 5 bis 200 µm aufweist und die Sicherheitsfunktionsschicht eine Dicke von 0,01 bis 20 µm aufweist.

8. Elektrode für eine Lithium-Sekundärbatterie nach Anspruch 7, wobei eine Standardabweichung der Dicke der Sicherheitsfunktionsschicht 60 nm oder weniger beträgt.

9. Elektrode für eine Lithium-Sekundärbatterie nach Anspruch 1, wobei die Elektrode als positive Elektrode dient.

10. Lithium-Sekundärbatterie, umfassend eine positive Elektrode, eine negative Elektrode und einen zwischen ihnen angeordneten Separator, wobei die Elektrode nach Anspruch 1 als positive Elektrode enthalten ist.

## Revendications

1. Électrode pour une batterie rechargeable au lithium comprenant :
un collecteur de courant métallique ;
une couche fonctionnelle de sécurité formée pour couvrir au moins une partie du collecteur de courant métallique, et incluant un polymère conducteur à base de polythiophène présentant des caractéristiques PTC (coefficient de température positive) et un agent thixotrope ; et
une couche de matériau actif incluant un matériau actif d'électrode et un matériau conducteur, et formée sur le collecteur de courant métallique et la couche fonctionnelle de sécurité.

2. Électrode pour une batterie rechargeable au lithium selon la revendication 1, dans laquelle le polymère conducteur à base de polythiophène a une température de fonctionnement utilisable de 70 à 130°C.

3. Électrode pour une batterie rechargeable au lithium selon la revendication 1, dans laquelle le polymère conducteur à base de polythiophène inclut un homopolymère ou copolymère contenant une unité de répétition de la Formule chimique 1 ci-après : 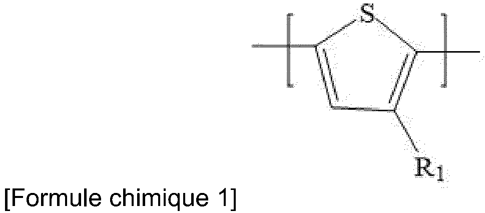
dans laquelle, dans la Formule chimique 1, R₁ est un groupe fonctionnel de la Formule chimique 2 ci-après, 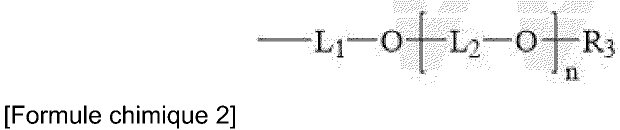
dans laquelle, dans la Formule chimique 2, L₁ est une liaison simple ou un groupe allylène, L₂ est un groupe allylène, R₃ est un hydrogène ou un groupe alkyle, et n est un nombre entier dans la plage de 1 à 5000.

4. Électrode pour une batterie rechargeable au lithium selon la revendication 1, dans laquelle l'agent thixotrope inclut un ou plusieurs éléments sélectionnés dans le groupe constitué d'une silice fumée hydrophile, un sel d'aluminium, une bentonite ou un dérivé de ces derniers, un composé à base de cellulose, un composé à base de polyvinyle, un composé à base d'acide polyacrylique, une urée modifiée et un copolymère d'acide maléique.

5. Électrode pour une batterie rechargeable au lithium selon la revendication 1, dans laquelle l'agent thixotrope est contenu dans une quantité de 0,1 à 5 parties en poids sur la base de 100 parties en poids du polymère conducteur à base de polythiophène.

6. Électrode pour une batterie rechargeable au lithium selon la revendication 1, dans laquelle la couche fonctionnelle de sécurité inclut en outre un ou plusieurs additifs sélectionnés dans le groupe constitué d'un matériau conducteur à base de carbone, une particule inorganique conductrice, un liant et un saccharide estérifié.

7. Électrode pour une batterie rechargeable au lithium selon la revendication 1, dans laquelle la couche de matériau actif a une épaisseur de 5 à 200 *µ*m, et la couche fonctionnelle de sécurité a une épaisseur de 0,01 à 20 *µ*m.

8. Électrode pour une batterie rechargeable au lithium selon la revendication 7, dans laquelle un écart standard de l'épaisseur de la couche fonctionnelle de sécurité est égal ou inférieur à 60 nm.

9. Électrode pour une batterie rechargeable au lithium selon la revendication 1, dans laquelle l'électrode sert d'électrode positive.

10. Batterie rechargeable au lithium comprenant une électrode positive, une électrode négative, et un séparateur interposé entre elles, dans laquelle l'électrode selon la revendication 1 est inclue comme électrode positive.
